# EUROPEAN PATENT APPLICATION

(11) **EP 2 916 586 A1**
(43) Date of publication of application: **09.09.2015**
(21) Application number: 14305315.5
(22) Date of filing: 05.03.2014
(51) Int. Cl.: H04W 36/00

(54) **System and method for selecting a handover cell**

(71) Applicant: ALCATEL LUCENT, 92100 Boulogne-Billancourt (FR)
(72) Inventor: Gacanin, Haris, 2018 Antwerpen (BE); Ramirez Gutierrez, Raymundo, 2018 Antwerpen (BE)
(74) Representative: D'Halleweyn, Nele Veerle Trees Gertrudis

(57) **Abstract**

A system for selecting a handover cell from a plurality of neighbouring cells of a serving cell in a mobile wireless communication network, said serving cell having a first set of first neighbouring cells, each first neighbouring cell having a second set of second neighbouring cells, said system comprising: a receiving unit configured for receiving a warning signal indicating that handover from said serving cell to a neighbouring cell of said plurality of neighbouring cells is needed; an obtaining unit configured for obtaining for said serving cell a neighbour list comprising the first set of first neighbouring cells, and for each first neighbouring cell thereof a first handover suitability value, and for at least one first neighbouring cell a second handover suitability value; a selection unit configured for selecting a handover cell based on said first and second suitability values, upon receipt of a warning signal by the receiving unit.

## Description

### Field of Invention

Embodiments of the invention relate to the field of handover cell selection in mobile wireless communication networks and in particular to systems and methods for selecting a handover cell from a plurality of neighbouring cells of a serving cell in a mobile wireless communication network.

### Background

Self Organizing Networks (SON) are becoming a crucial factor for any telecom operator to reduce rollout time or optimize the real-time performance of their networks. The explosive growth in mobile data and voice traffic has put significant load on operator's existing Radio Access Network (RAN) infrastructures. Studies on wireless communication usage show that more than 50% of all voice calls and more than 70% of all data usages originate from subscriber's home.

Generally, indoor coverage is characterized by call drops and bad customer experience. In addition high demanding data applications require more bandwidth that is unachievable in the traditional wireless networks design. To be competitive operators have to reduce their operational expenses by reducing the cost per mobile data bit. As a result, operators have flattened their network architecture as per 3GPP recommendations. Operators have introduced eNodeBs (LTE Base Stations) in the macro cellular networks and Home eNodeBs in the subscriber's home network to reduce call drops and handover (HO) failures.

In mobile wireless communications, the HO process has turned out to be a fundamental feature. The user mobility between cells depends on it. A HO may have an impact on the user quality of service (QoS) due to the packet delivery experiencing a delay to the destination end. The availability of several femto access points (FAPs) in a particular area most likely increases the probability to have issues in the HO procedure.

### Summary

The object of embodiments of the invention is to improve the handover cell selection process, while keeping the user QoS sufficiently stable.

According to an aspect of the invention there is provided a system for selecting a handover cell from a plurality of neighbouring cells of a serving cell in a mobile wireless communication network in which the serving cell has a first set of first neighbouring cells and each first neighbouring cell has a second set of second neighbouring cells. The system comprises a receiving unit configured for receiving a warning signal, indicating that a handover from the serving cell to a neighbouring cell of said plurality of neighbouring cells is needed. The system further comprises an obtaining unit configured for obtaining for said serving cell a neighbour list comprising the first set of first neighbouring cells, and for each first neighbouring cell thereof a first handover suitability value being representative for the suitability of a handover from said serving cell to said first neighbouring cell, and for at least one first neighbouring cell a second handover suitability value being representative for the suitability of a handover from said first neighbouring cell to the second set of second neighbouring cells. The system finally comprises a selection unit configured for selecting a handover cell based on said first and second suitability values, upon receipt of a warning signal by the receiving unit.

By looking not only at a first, but also at a second handover suitability value, embodiments of the invention anticipate future connectivity problems that may arise when a second handover is needed. By taking this into account, the handover process is improved and the user quality of service can be stable during the process. For example call drops and handover failures are reduced in comparison with the current state of the art solutions which only take into account the first suitability values of the first neighbouring cells of the serving cell. In prior art systems a first neighbouring cell of the serving cell can have a very good first suitability value, and, based on this value, be granted with a handover. If however this first neighbouring cell has no suitable second neighbouring cells except for the original serving cell, this original serving cell will be targeted for handover when a handover is needed from the first neighbouring cell. This handover selection process will repeat itself endlessly resulting in the well known "Ping-Pong" effect. This problem is resolved by taking into account the second handover suitability values of a neighbouring cell when selecting a suitable handover cell.

The skilled person understands that, in order to anticipate future connectivity problems, it is also possible to take into account the handover suitability values of more distant neighbouring cells, for example a third handover suitability value of a second neighbouring cell, a fourth handover suitability value of a third neighbouring cell, etcetera.

In an embodiment the first handover suitability value for each first neighbouring cell is representative for the signal strength of said first neighbouring cell. In a preferred embodiment, signal strength parameters of the serving cell and neighbouring cells are measured by a user equipment (UE) and the signal strength data are then reported to the serving cell.

According to a preferred embodiment the value representative for the signal strength of each first neighbouring cell is a carrier received signal strength indicator (RSSI). The carrier Received Signal Strength Indicator (RSSI) is defined in Section 5.1.3 of the technical specification of 3GPP-TS 36.214. It comprises the linear average of the total received power (in [W]) observed only in orthogonal frequency-division multiplexing (OFDM) symbols containing reference symbols for antenna port 0, in the measurement bandwidth, over N number of resource blocks by the UE from all sources, including co-channel serving and non-serving cells, adjacent channel interference, thermal noise etc. Typically, RSSI data, or signal strength data in general, are measured by the UE, which then reports the relevant data to its serving cell. These RSSI or signal strength data can be accessed across different cells via TR-196. Another parameter that might be measured by the UE and reported to the serving cell is a reference signal received power (RSRP).

In an embodiment the second handover suitability value is based on the signal strength of said second set of second neighbouring cells.

In such an embodiment each second neighbouring cell of the second set of neighbouring cells can have a value associated with it representative for the signal strength of said second neighbouring cell, for example an RSSI value. In order to obtain one single second handover suitability value from this multitude of values, a metric can be used. This metric might be e.g. a linear average, a sum of the values associated with each second neighbouring cell, an average of a predetermined number of best candidates, etcetera. In this manner one single second suitability value is obtained which is representative for the connectivity of a first neighbouring cell towards its entire second neighbour list as a whole.

In a possible embodiment of the invention said serving cell and said plurality of neighbouring cells are 3G/LTE femtocells and/or 3G/LTE macrocells.
In such an embodiment handover can occur on and between different levels. Handover can take place from femtocell to femtocell but for example also from a femtocell to a cell in the macrolayer and vice versa.

According to an embodiment of the invention the system comprises a data collection unit configured for requesting the serving cell to provide a value representative for the signal strength of each first neighbouring cell and for receiving from the serving cell said requested values. The data collection unit is also configured for requesting each first neighbouring cell to provide at least one value representative for the signal strength of the set of second neighbouring cells and for receiving from each first neighbouring cell said at least one requested value.

Such an embodiment may further comprise a calculation unit for calculating said first and second handover suitability values based on the values received by the data collection unit.

According to an embodiment the selection unit is configured for selecting from said first set of first neighbouring cells of said serving cell, the first neighbouring cell having the highest first handover suitability value and comparing for said selected neighbouring cell the second handover suitability value with a predefined threshold value. The selection unit is further configured for selecting said selected neighbouring cell for handover if said second handover suitability value is greater than said predefined threshold value or removing said selected cell from said first set of first neighbouring cells of said serving cell if said second handover suitability value is less than or equal to said predefined threshold value. Finally, the selection unit may be configured for repeating the above steps in order to find a neighbouring cell suitable for handover, if the second handover suitability value is less than or equal to the predefined threshold value.

According to another aspect of the invention, there is provided a method for selecting a handover cell from a plurality of neighbouring cells of a serving cell in a mobile wireless communication network. Said serving cell has a first set of first neighbouring cells and each first neighbouring cell has a second set of second neighbouring cells. Said method comprises receiving a warning signal indicating that a handover from said serving cell to a neighbouring cell of said plurality of neighbouring cells is needed. The method further comprises obtaining for said serving cell a neighbour list comprising the first set of first neighbouring cells, and for each first neighbouring cell thereof a first handover suitability value being representative for the suitability of a handover from said cell to said first neighbouring cell, and for at least one first neighbouring cell a second handover suitability value being representative for the suitability of a handover from said first neighbouring cell to the second set of second neighbouring cells. The method finally comprises selecting a handover cell based on said first and second suitability values, upon receipt of a warning signal.

In a preferred embodiment of the method described above the first handover suitability value for each first neighbouring cell is representative for the signal strength of said first neighbouring cell. In such an embodiment the value representative for the signal strength of each first neighbouring cell can be for example a carrier received signal strength indicator (RSSI).

According to an embodiment the second handover suitability value is based on the signal strength of said second set of second neighbouring cells.

In such an embodiment the second handover suitability value can be determined as a linear average or sum of the RSSIs of each second neighbouring cell of the second set of neighbouring cells.

In a possible embodiment of the invention said serving cell and said plurality of neighbouring cells are 3G/LTE femtocells and/or 3G/LTE macro cells.
In such an embodiment handover can occur on and between different levels. Handover can take place from femtocell to femtocell but for example also from a femtocell to a cell in the macrolayer and vice versa.

According to an embodiment the method further comprises requesting the serving cell to provide a value representative for the signal strength of each first neighbouring and receiving from the serving cell said requested values.

In an embodiment the method comprises requesting each first neighbouring cell to provide at least one value representative for the signal strength of the set of second neighbouring and receiving from each first neighbouring cell said at least one requested value.

According to an embodiment the method comprises selecting from said first set of first neighbouring cells of said serving cell, the first neighbouring cell having the highest first handover suitability value and comparing for said selected neighbouring cell the second handover suitability value with a predefined threshold value. The method further comprises selecting said selected neighbouring cell for handover if said second handover suitability value is greater than said predefined threshold value or removing said selected cell from said first set of first neighbouring cells of said serving cell if said second handover suitability value is less than or equal to said predefined threshold value. In the latter case the method may comprise repeating the above steps in until a neighbouring cell suitable for handover is found.

According to a further aspect of the invention, there is provided a computer program comprising computer-executable instructions to perform the method, when the program is run on a computer, according to any one of the steps of any one of the embodiments disclosed above.

### Brief description of the figures

The accompanying drawings are used to illustrate presently preferred non-limiting exemplary embodiments of systems of the present invention. The above and other advantages of the features and objects of the invention will become more apparent and the invention will be better understood from the following detailed description when read in conjunction with the accompanying drawings, in which:
Figure 1 illustrates schematically an exemplary embodiment of a system according to the invention;
Figure 2 illustrates schematically an embodiment where handover occurs between different cells of different layers of the mobile wireless network;
Figure 3 illustrates schematically an exemplary embodiment where first and second handover suitability values are used to select a suitable handover cell; and
Figure 4 is a flowchart illustrating an embodiment of the method of the invention.

### Description of embodiments

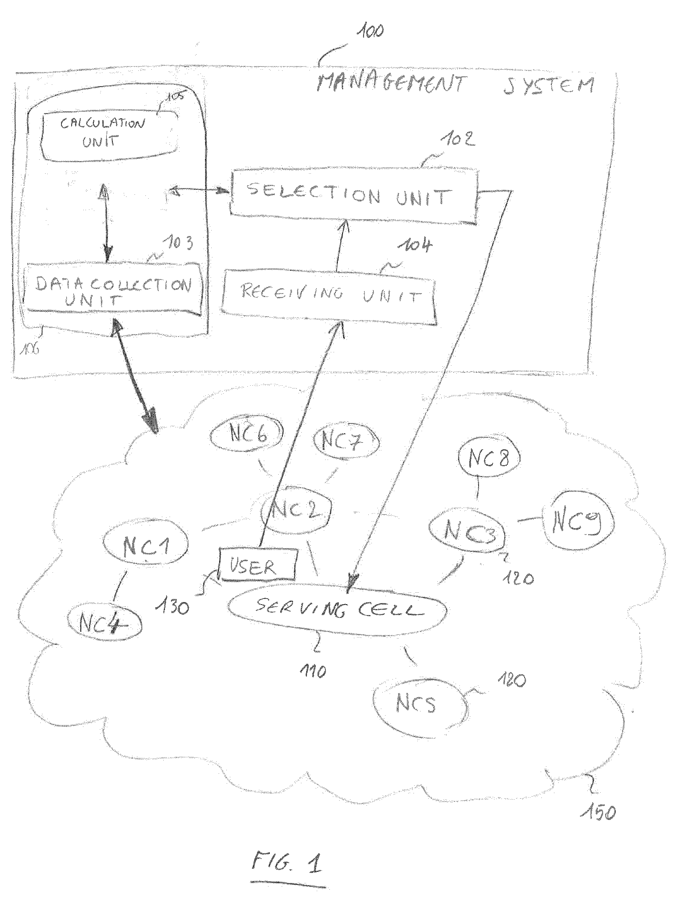

Figure 1 illustrates a management system 100 for selecting a handover cell from a plurality of neighbouring cells 120 of a serving cell 110 in a mobile wireless communication network 150. The serving cell has a first set of first neighbouring cells being NC1, NC2, NC3 and NC5. Each of these first neighbouring cells has a second set of second neighbouring cells. In figure 1 the serving cell has:
- NC4 and NC2 as second neighbouring cells through first neighbouring cell NC1;
- NC1, NC6, NC7 and NC3 as second neighbouring cells through first neighbouring cell NC2; and
- NC2, NC8 and NC9 as second neighbouring cells through first neighbouring cell NC 3.
In the management system 100 a receiving unit 104 is configured for receiving a warning signal indicating that a handover from the serving cell 110 to a neighbouring cell of said plurality of neighbouring cells 120 is needed.
Upon receipt of the warning signal an obtaining unit 106 is configured for obtaining for said serving cell 110 a neighbour list comprising the first set of first neighbouring cells, and for each first neighbouring cell thereof a first handover suitability value being representative for the suitability of a handover from said serving 110 cell to said first neighbouring cell. Additionally the neighbour list also comprises for at least one first neighbouring cell a second handover suitability value being representative for the suitability of a handover from said first neighbouring cell to the second set of second neighbouring cells.
The management system 100 further comprises a selection unit 102 configured for selecting a handover cell based on said first and second suitability values, upon receipt of a warning signal by the receiving unit 104.

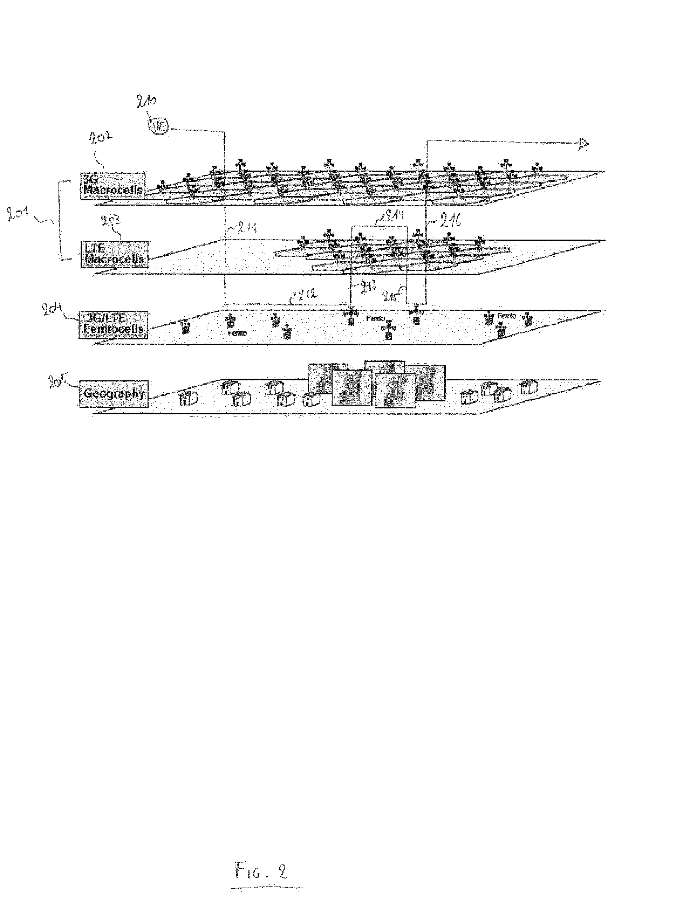

Figure 2 illustrates schematically the different layers in a wireless communication network and a user 210 'moving' through the network. The illustrated topology consists of a macrolayer 201, comprising 3G macrocells 202 on the upper level and LTE macrocells 203 on the lower level, and a 3G/LTE femtolayer 204.
In order to provide the user with a sufficient stable QoS, different handovers are made:
- from a 3G macrocell to a femtocell 211;
- from a femtocell to another femtocell 212;
- from a femtocell to a LTE macrocell 213;
- from a LTE macrocell to a LTE macrocell 213;
- from a LTE macrocell to a femtocell 215; and
- from a femtocell to a 3G macrocell 216.
This provided sequence of handovers shows that a handover can occur between cells of the same layer, but also between cells of different layers.

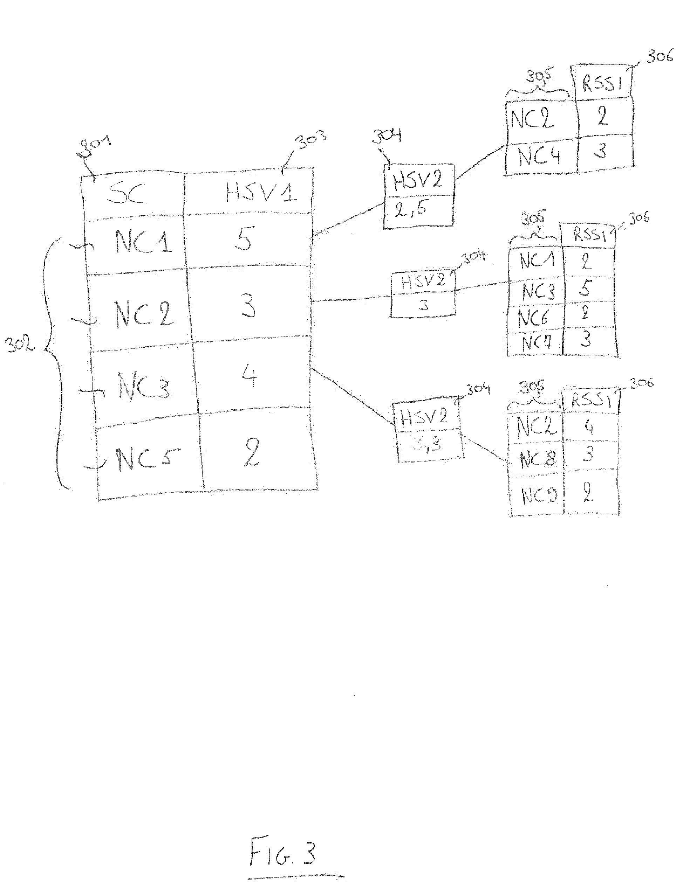

Figure 3 illustrates schematically a neighbour list 301 comprising the first set of first neighbouring cells 302 of a serving cell, and for each first neighbouring cell thereof a first handover suitability value 303 being representative for the suitability of a handover from said serving cell to said first neighbouring cell. A straight forward example of a possible first handover suitability value is a value representative for the signal strength of said first neighbouring. An example of such a value representative for the signal strength of each first neighbouring cells is a carrier received signal strength indicator (RSSI). For at least one first neighbouring cell a second handover suitability value 304 being representative for the suitability of a handover from said first neighbouring cell to the second set of second neighbouring cells 305 is obtained. This second handover suitability value 304 can be for instance a value which is based on the signal strength of said second set of second neighbouring cells.
For transforming these multiple values representative of the signal strength of each of the second neighbouring cells into one second handover suitability value of the first neighbouring cell a metric can be used. This metric can be given as a linear average or an accumulated value of the RSSI values 306 of a set of second neighbouring cells 305 (e.g. only the second neigbouring cells having an RSSI value > 2 are part of the set) of said first neighbouring cell 303. In figure 3 the linear average of the RSSI values throughout each second neighbour of the set is used as a second handover suitability value 304. The RSSI values displayed in figure 3 are merely exemplary values which are representative for RSSI, used to illustrate this particular embodiment. It is noted that other metrics can be used to determine the second handover suitability value. For example other metrics may include summing the RSSI value of each second neighbouring cell or of a selected group of second neighbouring cells. Based on the second handover suitability values in figure 3 NC3 would be selected for handover.

If one would only take into account the signal strength or first handover suitability value of the first neighbouring cells, NC1 would be selected for handover. However this handover to NC1 could suffer from bad QoS due to the "Ping-Pong" effect since NC 1 provides a relatively bad further connectivity and this handover procedure does not take into consideration that users are moving. The skilled person understands that the embodiment of figure 3 could be extended to include third, fourth and/or more distant neighbour lists and associated handover suitability values in order to obtain a broader view and basis for handover cell selection.

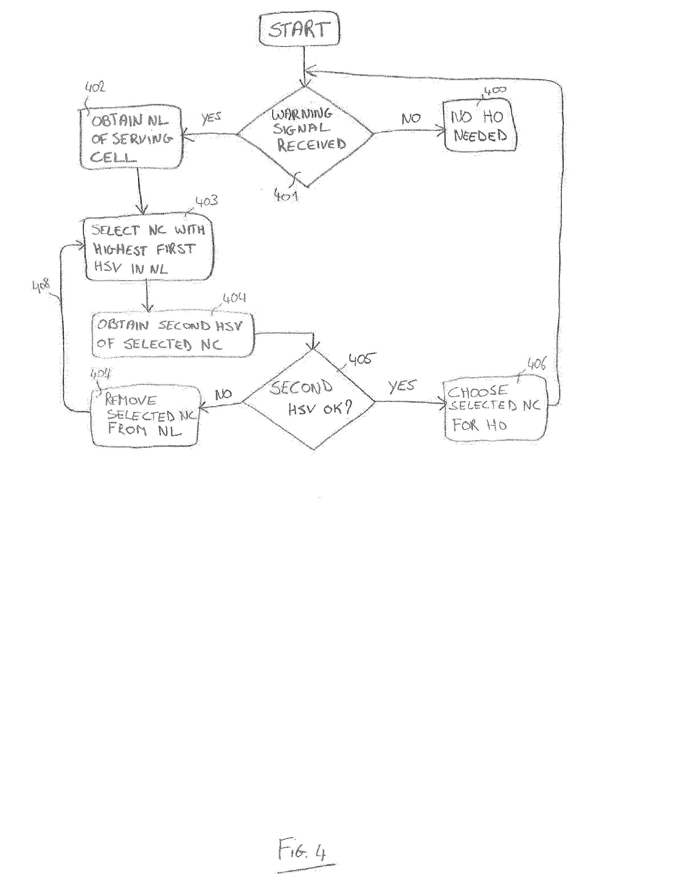

The flowchart of figure 4 illustrates a method for selecting a handover cell from a plurality of neighbouring cells of a serving cell in a mobile wireless communication network, said serving cell having a first set of first neighbouring cells, each first neighbouring cell having a second set of second neighbouring cells. In step 401 it is determined if a warning signal, indicating that a handover is needed, is received. If no warning signal is received there is no need to select another cell than the current serving cell, see step 400.
On the other hand if in step 401 it is determined that a warning signal is received, the first step 402 is to obtain for the serving cell a neighbour list comprising the first set of first neighbouring cells, and for each first neighbouring cell thereof a first handover suitability value being representative for the suitability of a handover from said serving cell to said first neighbouring cell.
The second step 403 is to select from the neighbour list the first neighbouring cell having the highest first handover suitability value. In a further step 404 the second handover suitability value for said selected cell is obtained, whereupon in step 405 this second handover suitability value is compared with a predefined threshold value.Finally in step 406, the selected neighbouring cell is selected for handover if said second handover suitability value is greater than said predefined threshold value. If said second handover suitability is less than or equal to said predefined threshold value, in step 407 the selected cell is removed from said first set of first neighbouring cells and the previous steps 403-405 are repeated with the updated set of first neighbouring cells, see arrow 408.

The skilled person understands that the embodiment of figure 4 could be extended to include multiple levels, e.g. third, fourth and/or more distant handover suitability values in order to determine a handover cell using more extensive algorithms. Examples of other algorithms that can be used for dealing with multiple levels include Viterbi algorithms or in general any shortest path search algorithm such as Dijkstra algorithms. More generally, any graph search algorithm can be used to find the minimum weight connectivity mapping through different neighbor lists. This is equivalent to solve a single source shortest path problem for a network (graph) where edge path costs are accumulated power of each neighbor list. For a given target neighbor list, the algorithm finds the "connectivity map" that minimizes handover failure (i.e. has the highest accumulated power per list, i.e. has the best suitability values) between the source neighbor list and the extended neighbor list.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A system for selecting a handover cell from a plurality of neighbouring cells of a serving cell in a mobile wireless communication network, said serving cell having a first set of first neighbouring cells, each first neighbouring cell having a second set of second neighbouring cells, said system comprising:
- a receiving unit configured for receiving a warning signal indicating that a handover from said serving cell to a neighbouring cell of said plurality of neighbouring cells is needed;
- an obtaining unit configured for obtaining for said serving cell a neighbour list comprising the first set of first neighbouring cells, and for each first neighbouring cell thereof a first handover suitability value being representative for the suitability of a handover from said serving cell to said first neighbouring cell, and for at least one first neighbouring cell a second handover suitability value being representative for the suitability of a handover from said first neighbouring cell to the second set of second neighbouring cells;
- a selection unit configured for selecting a handover cell based on said first and second suitability values, upon receipt of a warning signal by the receiving unit.

2. The system of claim 1, wherein for each first neighbouring cell the first handover suitability value is representative for the signal strength of said first neighbouring.

3. The system of claim 1 or 2, wherein the second handover suitability value is based on the signal strength of said second set of second neighbouring cells.

4. The system of any one of the previous claims, wherein said serving cell and said plurality of neighbouring cells are 3G/LTE femtocells and/or 3G/LTE macro cells.

5. The system of any one of the previous claims, comprising a data collection unit configured
- for requesting the serving cell to provide a value representative for the signal strength of each first neighbouring cell and for receiving from the serving cell said requested values; and/or
- for requesting each first neighbouring cell to provide at least one value representative for the signal strength of the set of second neighbouring cells; and for receiving from each first neighbouring cell said at least one requested value.

6. The system of claim 5, comprising a calculation unit for calculating said first and second handover suitability values based on the values received by the data collection unit.

7. The system of claim 5 or 6, wherein the value representative for the signal strength of each first neighbouring cell is a carrier received signal strength indicator (RSSI).

8. A method for selecting a handover cell from a plurality of neighbouring cells of a serving cell in a mobile wireless communication network, said serving cell having a first set of first neighbouring cells, each first neighbouring cell having a second set of second neighbouring cells, said method comprising:
- receiving a warning signal indicating that a handover from said serving cell to a neighbouring cell of said plurality of neighbouring cells is needed;
- obtaining for said serving cell a neighbour list comprising the first set of first neighbouring cells, and for each first neighbouring cell thereof a first handover suitability value being representative for the suitability of a handover from said cell to said first neighbouring cell, and for at least one first neighbouring cell a second handover suitability value being representative for the suitability of a handover from said first neighbouring cell to the second set of second neighbouring cells;
- selecting a handover cell based on said first and second suitability values, upon receipt of a warning signal by the receiving unit.

9. The method of claim 8, wherein for each first neighbouring cell the first handover suitability value is representative for the signal strength of said first neighbouring.

10. The method of claim 8 or 9, wherein the second handover suitability value is representative for the signal strength of said second set of second neighbouring cells.

11. The method of any one of the previous claims, wherein said serving cell and said plurality of neighbouring cells are 3G/LTE femtocells and/or 3G/LTE macro cells.

12. The method of any one of the claims 8-11, comprising requesting the serving cell to provide a value representative for the signal strength of each first neighbouring cell and receiving from the serving cell said requested values.

13. The method of any one of the claims 8-12, requesting each first neighbouring cell to provide at least one value representative for the signal strength of the set of second neighbouring cells; and receiving from each first neighbouring cell said at least one requested value.

14. The method of any of the claims 8-13, comprising:
- selecting from said first set of first neighbouring cells of said serving cell, the first neighbouring cell having the highest first handover suitability value;
- comparing for said selected neighbouring cell the second handover suitability value with a predefined threshold value;
- selecting said selected neighbouring cell for handover if said second handover suitability value is greater than said predefined threshold value; or
- removing said selected cell from said first set of first neighbouring cells of said serving cell if said second handover suitability value is less than or equal to said predefined threshold value.

15. A computer program comprising computer-executable instructions to perform the method, when the program is run on a computer, of any one of the claims 8-14.
